# FASCICULE DE BREVET EUROPEEN

(11) **EP 2 107 722 B1**
(45) Date de publication et mention de la délivrance du brevet: **29.02.2012**
(21) Numéro de dépôt: 09156069.8
(22) Date de dépôt: 24.03.2009
(51) Int. Cl.: H04L 12/28

(54) **Procédé de gestion d'un flux de données, passerelle domestique et dispositif correspondants**
Verfahren zur Datenstrom-Kontrolle, Heimnetzwerk-Gateway und korrespondierende Vorrichtung
Method for managing a flow of data, domestic gateway and corresponding apparatus

(30) Priorité: 31.03.2008 FR 0852093
(43) Date de publication de la demande: 07.10.2009
(73) Titulaire: FRANCE TELECOM, 75015 Paris (FR)
(72) Inventeur: Bouvet, Bertrand, 22700, PERROS-GUIREC (FR); Gustin, Emmanuel, 22700, SAINT QUAY PERROS (FR)

(56) Documents cités:
- US-A1- 2004 133 627
- US-A1- 2007 036 098

## Description

La présente invention se rapporte de manière générale aux domaines de l'informatique et des télécommunications, et plus précisément elle concerne les passerelles domestiques.

Une telle passerelle sert de point d'entrée sur un ou plusieurs réseaux externes à différents équipements utilisateurs connectés entre eux sur un réseau local ou directement à la passerelle domestique. Celle-ci est donc en quelque sorte un modem amélioré, servant de routeur connecté à un ou plusieurs réseaux externes tels qu'Internet et fournissant diverses interfaces vers des équipements utilisateurs, telles qu'une interface FXS (d'après l'anglais "Foreign eXchange Subscriber") vers un téléphone analogique ou une interface WiFi (Wireless Fidelity, selon la norme "Institute of Electronical and Electronics Engineers" (IEEE) 802.11) vers un ordinateur personnel.

Actuellement les passerelles domestiques permettent d'offrir différents services dits "convergents", tels que la voix sur IP ou "VoIP", d'après l'anglais "Voice over Internet Prococol", l'accès à Internet ou encore la télévision par Internet. Or en réalité ces services sont fournis de manière indépendante les uns des autres. Les passerelles domestiques n'assurent en effet aucun couplage permettant notamment d'assurer qu'un service fourni est délivré sur l'équipement utilisateur le plus approprié en fonction du contexte. Ainsi lorsqu'un utilisateur navigue sur Internet sur son ordinateur personnel relié à une passerelle domestique et qu'un téléphone fixe, également relié à cette passerelle, sonne, il doit s'interrompre et se déplacer pour répondre à cet appel, alors que cet appel ne lui était pas forcément destiné ou qu'il aurait été plus approprié de ne pas répondre, par exemple parce-que l'appel était masqué. Il aurait été préférable dans ce cas pour l'utilisateur de recevoir directement l'appel sur son ordinateur personnel, équipé d'un haut-parleur et d'un microphone, après avoir préalablement téléchargé un logiciel de VoIP approprié.

La demande de brevet KR20030083843 tente de résoudre ce problème pour une passerelle domestique fournissant un service de voix sur IP à un LAN (Local Area Network) auquel sont connectés plusieurs ordinateurs. En consultant une base de données, dans laquelle sont enregistrées diverses informations sur les utilisateurs ainsi que sur les états des terminaux, lors de l'arrivée d'un appel, la passerelle transmet l'appel au terminal le plus approprié. Cependant ces informations ne sont pas toujours pertinentes dans le cas d'un réseau domestique: en effet chaque équipement utilisateur n'est pas forcément affecté à un utilisateur en particulier, et son statut n'est pas non plus forcément lié à la disponibilité des personnes concernées par cet équipement. Ainsi si l'on applique cette solution dans le cas précédemment décrit où un utilisateur navigue sur son ordinateur personnel lorsque le téléphone fixe sonne, l'appel correspondant serait automatiquement redirigé vers l'ordinateur de l'utilisateur, alors que cet appel ne lui était pas forcément destiné.

De plus, cette indépendance entre les services fournis par une même passerelle domestique ne permet pas de les combiner, par exemple pour améliorer un service fourni sur un équipement utilisateur relié à une passerelle domestique en utilisant les capacités d'autres équipements également reliés à cette passerelle.

La demande de brevet US2004/133627 divulgue un système de communication dans lequel des services multimédia, tels que la notification d'évènements de service ou d'états d'appels, ou le transfert d'appel, sont implémentés dans un appareil de communication qui peut être soit un téléphone IP soit une passerelle résidentielle connectée à plusieurs terminaux_{.} Ces services multimédia sont programmés en langage XML. Lors de la réception d'évènements réseau ou liés à un terminal auquel l'appareil de communication est connecté, une logique de service prédéfinie est mise en oeuvre.

La présente invention vise à remédier aux inconvénients de la technique antérieure en fournissant un procédé et des dispositifs permettant à un équipement utilisateur, ou plus généralement un dispositif, relié à une passerelle domestique, d'interagir avec un service fourni par cette passerelle à un autre dispositif.

A cette fin, l'invention propose un procédé de gestion d'un flux de données dont l'établissement entre un dispositif source et un dispositif destinataire implique le passage d'un flux de signalisation par une passerelle domestique, l'un desdits dispositifs étant un premier dispositif distant connecté à un réseau de communication et l'autre desdits dispositifs étant un deuxième dispositif connecté audit réseau de communication par l'intermédiaire de ladite passerelle domestique, caractérisé en ce qu'il comporte une étape de notification d'un évènement relatif à une demande d'établissement dudit flux de données par ladite passerelle domestique à un troisième dispositif connecté à ladite passerelle domestique.

Grâce à l'invention, lorsqu'un flux de signalisation relatif à un service transite par la passerelle domestique, préalablement par exemple à l'établissement d'un appel entrant ou d'un appel sortant si ce service est la voix sur IP, ou préalablement à l'établissement d'un flux vidéo si ce service est la télévision par Internet, la passerelle domestique en informe un terminal a priori non concerné par ce service, par exemple un ordinateur personnel sur lequel navigue un utilisateur. Ainsi l'utilisateur par l'intermédiaire de son ordinateur personnel a la possibilité d'interagir avec ce service en fonction des informations contenues dans la notification envoyée par la passerelle domestique.

Par exemple si la notification indique l'arrivée d'un appel entrant masqué sur le téléphone fixe de l'utilisateur, celui-ci sélectionne une option sur son ordinateur personnel permettant de demander à la passerelle domestique de transférer l'appel vers une messagerie vocale. Dans le cas où la notification indique l'arrivée d'un flux vidéo, par exemple parce-que l'un des enfants de l'utilisateur a sélectionné une chaîne sur un téléviseur relié à la passerelle domestique, l'ordinateur personnel recevant cette notification va rechercher automatiquement sur Internet une page web liée au programme vidéo correspondant et l'affiche sur son écran, avec un menu permettant à l'utilisateur de demander à la passerelle domestique de changer la chaîne reçue par le téléviseur.

L'invention permet donc à l'utilisateur de faire interagir les services qui sont fournis par sa passerelle domestique, pour obtenir des services plus adaptés à un contexte donné.

Selon une caractéristique avantageuse, le procédé de gestion d'un flux de données selon l'invention comporte en outre une étape de notification d'au moins un autre évènement relatif à l'établissement dudit flux de données lorsque celui-ci est établi entre ledit dispositif source et ledit dispositif destinataire.

En étant notifié d'autres évènements relatifs à l'établissement du flux de données, tels que la sonnerie d'un téléphone si le flux de données correspond à un appel entrant, le décrochage ou le raccrochage de ce téléphone, le troisième terminal a la possibilité d'interagir conditionnellement à ces évènements. Par exemple au bout d'un nombre prédéterminé de sonneries, le troisième terminal propose à l'utilisateur une liste d'actions telles que le raccrochage, le transfert de l'appel vers une messagerie vocale, ou le transfert de l'appel vers un destinataire à sélectionner dans une liste déroulante.

Selon une autre caractéristique avantageuse, le procédé de gestion d'un flux de données selon l'invention comporte en outre une étape de réception par ladite passerelle domestique d'une demande de reproduction dudit flux de données, envoyée par ledit troisième dispositif, et une étape de recopie dudit flux de données et de transmission dudit flux ainsi recopié par ladite passerelle domestique audit troisième dispositif.

Cette caractéristique permet à l'utilisateur, lorsque le flux de données correspond à un appel téléphonique entrant ou sortant, d'écouter la conversation téléphonique correspondante passant par la passerelle domestique, ou de l'enregistrer. Lorsque le flux de données est un flux vidéo, cette caractéristique permet à l'utilisateur d'enregistrer ou de regarder une émission diffusée sur le téléviseur destinataire du flux vidéo.

Selon une autre caractéristique avantageuse, lors de ladite étape de notification, l'établissement dudit flux de données est suspendu, ladite passerelle domestique donnant le contrôle dudit flux de données audit troisième dispositif.

Cette implémentation particulière de l'invention permet au troisième dispositif de contrôler le flux de données, c'est-à-dire notamment d'empêcher l'établissement du flux de données ou de transférer ce flux de données vers un autre dispositif avant que ce flux de données ne s'établisse entre le dispositif source et le dispositif destinataire. L'utilisateur a ainsi le temps de décider de la suite à donner à un appel par exemple, avant que quelqu'un d'autre ne décroche.

Selon une autre caractéristique avantageuse, ladite étape de notification est suivie d'une étape de réception d'une instruction de transfert dudit flux de données à un dispositif autre que ledit dispositif destinataire, envoyée par ledit troisième dispositif, et d'une étape de transfert par ladite passerelle domestique dudit flux de données audit autre dispositif.

L'invention permet en effet au troisième dispositif de transférer le flux de données vers un dispositif plus approprié par exemple. Il est à noter qu'il est possible d'effectuer ce transfert sans prise de contrôle du flux de données par le troisième dispositif, car la passerelle domestique étant en coupure du flux de données, elle est en mesure de transférer facilement le flux de données vers un autre dispositif que le dispositif destinataire.

L'invention concerne aussi une passerelle domestique comportant des moyens de connexion à un réseau de communication auquel est connecté un premier dispositif distant, des moyens de connexion à un deuxième dispositif, et des moyens de réception d'un flux de signalisation en provenance d'un desdits dispositifs dit dispositif source pour établir un flux de données avec l'autre desdits dispositifs dit dispositif destinataire, caractérisée en ce qu'elle comporte en outre des moyens de notification d'un évènement relatif à une demande d'établissement dudit flux de données à un troisième dispositif lorsque celui-ci est connecté à ladite passerelle domestique.

Selon une caractéristique avantageuse, la passerelle domestique selon l'invention comporte en outre des moyens d'interruption de l'établissement dudit flux de données entre ledit dispositif source et ledit dispositif destinataire, et des moyens de réception d'au moins une instruction envoyée par ledit troisième dispositif et indiquant la suite à donner audit flux de données.

L'invention concerne encore un dispositif comportant des moyens de connexion à une passerelle domestique pour accéder à un réseau de communication, caractérisé en ce qu'il comporte des moyens de réception d'une notification d'un évènement relatif à une demande d'établissement d'un flux de données entre deux autres dispositifs et dont l'établissement nécessite le passage d'un flux de signalisation dans ladite passerelle domestique.

Selon une caractéristique avantageuse, le dispositif selon l'invention comporte en outre:
- des moyens d'association d'un identifiant d'un desdits autres dispositifs, inclus dans ladite notification, avec une adresse de ressource hébergée dans un serveur distant,
- et des moyens de téléchargement de ladite ressource.

Cette caractéristique supplémentaire permet au dispositif recevant la notification de télécharger automatiquement des informations pertinentes associées au flux de données. Par exemple si le dispositif est l'ordinateur personnel d'un utilisateur et que le flux de données correspond à un appel de l'utilisateur vers une plate-forme d'assistance informatique, l'ordinateur télécharge des informations fournies par un serveur lié à cette plate-forme pour guider l'utilisateur dans sa demande d'assistance.

Selon une autre caractéristique avantageuse, le dispositif selon l'invention comporte en outre des moyens de contrôle dudit flux de données pour recevoir celui-ci, et des moyens de reconnaissance vocale aptes à utiliser une grammaire contenue dans ladite ressource.

Dans le cas d'usage décrit précédemment, cette autre caractéristique permet en plus à l'utilisateur de transférer l'appel vers son ordinateur afin d'utiliser un logiciel de reconnaissance vocale. Celui-ci, en repérant des mots clefs dans la conversation de l'utilisateur, effectue par exemple une navigation contextuelle sur le serveur de la plate-forme d'assistance, ce qui permet d'améliorer le service rendu à l'utilisateur.

L'invention concerne enfin un programme d'ordinateur comportant des instructions pour mettre en oeuvre le procédé selon l'invention, lorsqu'il est exécuté sur un ordinateur.

Il est à noter que la passerelle domestique selon l'invention, le dispositif selon l'invention ainsi que le programme d'ordinateur selon l'invention présentent des avantages analogues à ceux du procédé de gestion d'un flux de données selon l'invention.

D'autres caractéristiques et avantages apparaîtront à la lecture de modes de réalisation préférés décrits en référence aux figures dans lesquelles:
- la figure 1 représente une passerelle domestique, reliée à divers réseaux et dispositifs de communication, et mettant en oeuvre l'invention dans un premier mode de réalisation du procédé selon l'invention,
- la figure 2 représente des étapes du procédé selon l'invention dans le premier mode de réalisation,
- la figure 3 représente un premier exemple de fonctionnement de l'invention dans le premier mode de réalisation,
- la figure 4 représente un deuxième exemple de fonctionnement de l'invention dans le premier mode de réalisation,
- la figure 5 représente un troisième exemple de fonctionnement de l'invention dans le premier mode de réalisation,
- la figure 6 représente un quatrième exemple de fonctionnement de l'invention dans le premier mode de réalisation,
- la figure 7 représente un cinquième exemple de fonctionnement de l'invention dans le premier mode de réalisation,
- la figure 8 représente une passerelle domestique, reliée à un réseau et plusieurs dispositifs de communication, et mettant en oeuvre l'invention dans un deuxième mode de réalisation du procédé selon l'invention,
- et la figure 9 représente un exemple de fonctionnement de l'invention dans le deuxième mode de réalisation.

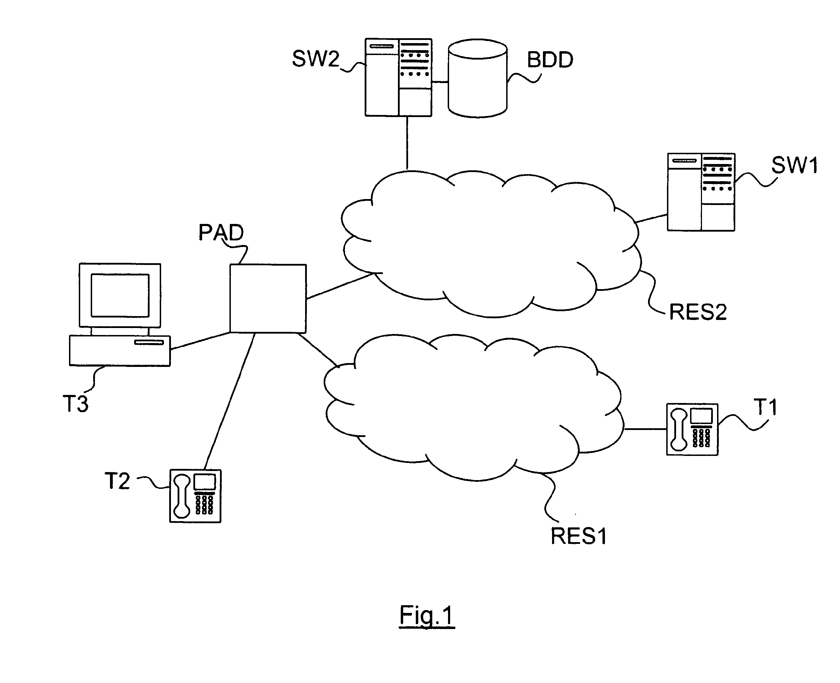

Selon un premier mode de réalisation de l'invention représenté à la **figure 1**, le procédé de gestion d'un flux de données est mis en oeuvre de manière logicielle dans une passerelle domestique PAD d'un utilisateur, reliée par exemple par liaison ADSL (d'après l'anglais "Asymmetrical Digital Subscriber Line") au réseau Internet RES2, et à un réseau RES1 de téléphonie sur IP (d'après l'anglais "Internet Protocol"). La passerelle domestique PAD est reliée:
- à un terminal T3, qui est un ordinateur personnel, par exemple par liaison filaire ou WiFi,
- et à un téléphone T2, par exemple par une interface FXS s'il s'agit d'un téléphone analogique, ou par un port USB si le téléphone T2 est un téléphone sans fil relié à une base DECT (d'après l'anglais "Digital Enhanced Cordless Telecommunications"), connectée par ce port USB à la passerelle domestique PAD.

Dans ce premier mode de réalisation de l'invention, la passerelle domestique PAD permet au terminal T3, de gérer un appel téléphonique entre un téléphone T1 distant, relié directement au réseau RES1 de téléphonie sur IP s'il s'agit d'un téléphone sur IP ou par l'intermédiaire du réseau RTC (Réseau Téléphonique Commuté) sinon, et le téléphone T2. Le flux de données est donc ici un flux vocal bidirectionnel transporté dans le réseau RES1 sur une couche RTP (d'après l'anglais "Real-time Transport Prococol").

Pour cela, la passerelle domestique PAD implémente une interface propriétaire permettant de:
- notifier le terminal T3 de l'arrivée d'un type de message lié à la signalisation d'un appel entrant depuis le terminal T1 vers le terminal T2, ou sortant depuis le terminal T2 vers le terminal T1,
- et de recevoir des instructions du terminal T3 pour modifier cette signalisation afin d'influer sur le traitement habituel de l'appel par la passerelle domestique PAD.

Le terminal T3 implémente donc également une interface propriétaire, permettant symétriquement de recevoir des notifications de la passerelle domestique PAD, et de lui envoyer des instructions pour modifier un appel en cours d'établissement ou déjà établi. Cette interface propriétaire est par exemple implémentée dans une application appelée "widget", qui présente une interface graphique à l'utilisateur, permettant de visualiser une notification de la passerelle domestique PAD et de sélectionner une action à réaliser suite à cette notification. Cette application est soit lancée automatiquement lors du démarrage du terminal T3, soit manuellement par l'utilisateur.

De préférence, l'interface propriétaire entre la passerelle domestique PAD et le terminal T3 est implémentée sous forme d'une interface de programmation, permettant à l'utilisateur de développer lui-même ses propres "widgets", par exemple une interface de programmation de type XML-RPC, d'après l'anglais "eXtensible Markup Language Remote Procedure Call". Ainsi l'utilisateur est à même de réaliser un couplage entre les différents services fournis par sa passerelle domestique, de manière adaptée à ses besoins.

L'implémentation de ces interfaces sera mieux comprise à la lecture de diagrammes de flux entre le terminal T3 et la passerelle domestique PAD, tels que décrits en relation avec les figures suivantes.

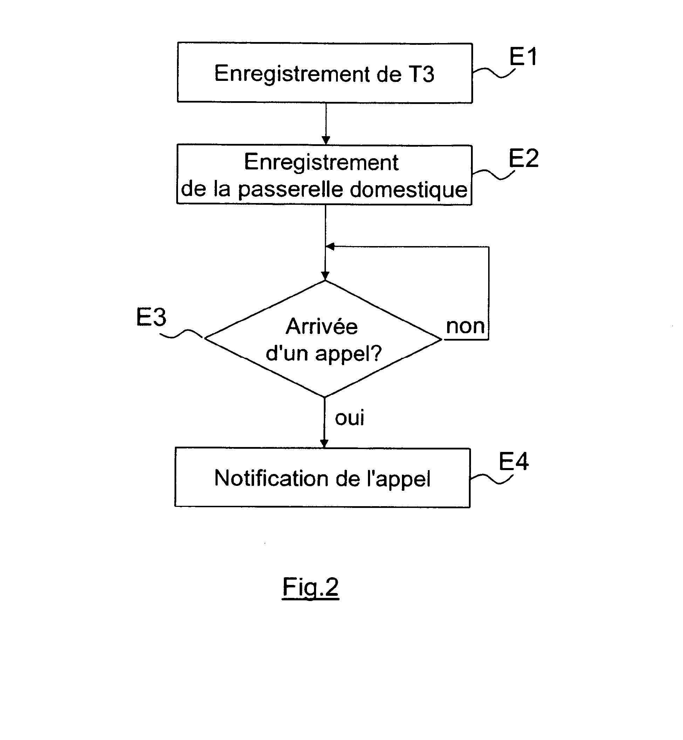

Dans ce premier mode de réalisation de l'invention, le procédé de gestion d'un flux de données selon l'invention comporte des étapes E1 à E4 représentées à la **figure 2****.** Les étapes E1 et E2 sont des étapes préalables au fonctionnement du procédé selon l'invention, elles ont lieu par exemple juste après la mise sous tension de la passerelle domestique PAD et la connexion du terminal T3 à la passerelle domestique PAD. Lors de l'arrivée d'un appel, plusieurs autres étapes se déroulent ensuite en fonction du contexte d'utilisation, dont les étapes E3 et E4. Les étapes E1 et E2 ne sont donc pas répétées lors d'un appel ultérieur, alors que les étapes E3 et E4 le sont.

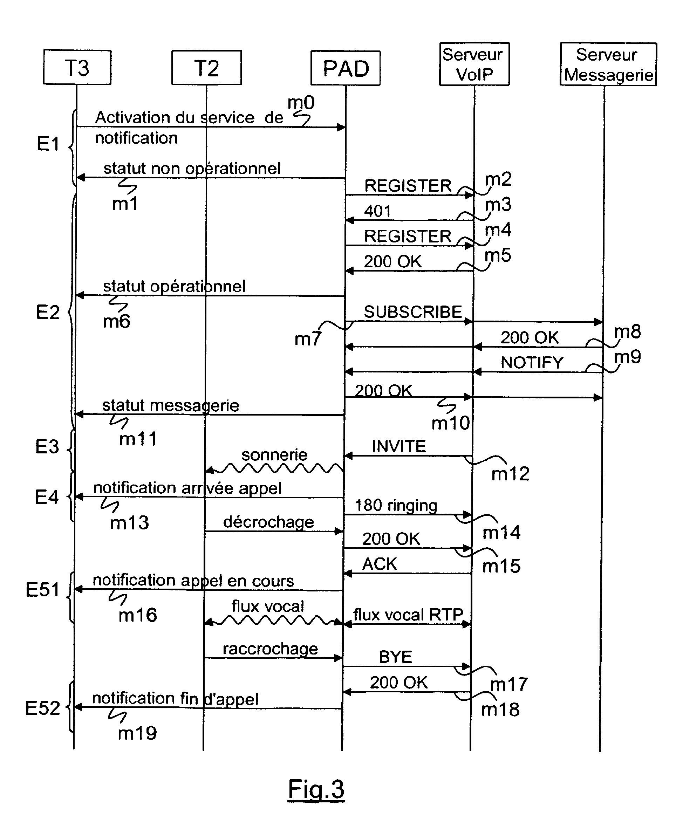

L'étape E1 est l'enregistrement du terminal T3 auprès de la passerelle domestique PAD pour recevoir des notifications d'évènements de la part de celle-ci. Cet enregistrement est effectué par l'envoi d'un message m0 du terminal T3 à la passerelle domestique PAD comme représenté à la **figure 3**. En fonction de l'implémentation du widget dans le terminal T3 ou de la configuration du widget par l'utilisateur, différentes sortes d'enregistrements sont possibles. En effet dans ce message m0, le terminal T3 indique pour quels évènements il souhaite être notifié, et si la notification d'une demande d'établissement d'appel doit suspendre l'établissement de l'appel ou non. Ainsi dans l'exemple de fonctionnement de l'invention à la **figure 3**, le terminal T3 indique dans le message m0 qu'il souhaite être notifié des évènements "arrivée d'un appel", "appel en cours" et "fin d'appel", l'évènement "arrivée d'un appel" étant en fait la réception par la passerelle domestique PAD d'une demande d'établissement d'appel. De plus le terminal T3 indique dans le message m0 que la notification d'une demande d'établissement d'appel ne suspend pas l'établissement de l'appel, c'est-à-dire que la passerelle domestique PAD n'attend pas de réponse du terminal T3 pour établir l'appel. Le terminal T3 indique également dans cet exemple de fonctionnement qu'il souhaite être averti des nouveaux messages présents sur sa messagerie vocale dans le réseau RES1 de téléphonie sur IP.

Dans cette étape E1, la passerelle domestique PAD répond au terminal T3 par un message m1 indiquant si la passerelle domestique est opérationnelle ou non pour le service de téléphonie sur IP. Dans l'exemple de fonctionnement de l'invention à la **figure 3**, le message m1 indique que la passerelle domestique PAD n'est pas enregistrée dans le réseau RES1 de téléphonie sur IP.

L'étape suivante E2 est donc l'enregistrement de la passerelle domestique PAD dans le réseau RES1 de téléphonie sur IP. Il est à noter que l'ordre des étapes E1 et E2 est indifférent, ces étapes devant simplement être effectuées avant l'arrivée d'un appel.

Dans cette étape E2, la passerelle domestique PAD envoie un message m2 à un serveur de voix sur IP dans le réseau RES1 de téléphonie sur IP. Ce message m2 est un message SIP (d'après l'anglais "Session Initiation Protocol") REGISTER qui fournit au serveur de voix sur IP une adresse permettant à celui-ci de contacter l'utilisateur. Bien entendu d'autres protocoles sont utilisables dans ce mode de réalisation de l'invention, par exemple le protocole H.323 de l'ITU-T (d'après l'anglais "International Telecommunication Union -Telecommunication Standardization Sector") en fonction du protocole utilisé dans le réseau RES1. Le serveur de voix sur IP répond avec un message m3, qui est un message SIP 401 contenant une clé d'authentification en vue d'authentifier la passerelle domestique PAD. La passerelle domestique PAD utilise cette clé d'authentification, en complément de différents paramètres d'identification configurés dans la passerelle domestique PAD, pour calculer une réponse d'authentification. Elle envoie ensuite un message de réponse m4 "SIP REGISTER" contenant des paramètres d'authentification, au serveur de voix sur IP. Enfin le serveur de voix sur IP envoie un message m5 "SIP 200 OK" à la passerelle domestique PAD, lui indiquant que son enregistrement dans le réseau RES1 est effectué. La passerelle domestique PAD notifie ensuite dans un message m6 au terminal T3 que le service de téléphonie sur IP fourni par la passerelle domestique PAD est maintenant opérationnel.

Dans l'exemple de fonctionnement de l'invention à la **figure 3**, la passerelle domestique PAD s'enregistre également dans cette étape E2 auprès d'un serveur de messagerie dans le réseau RES1 de téléphonie sur IP. Cela lui permet notamment d'être notifiée des nouveaux messages laissés sur ce serveur de messagerie et de laisser un indicateur de nouveaux messages sur le téléphone T2. Pour cela la passerelle domestique PAD envoie un message m7, qui est un message SIP SUBSCRIBE, au serveur de messagerie. Celui-ci répond à la passerelle domestique PAD par un message m8 "SIP 200 OK" pour lui indiquer que sa demande de souscription à la notification de nouveaux messages est acceptée. Puis le serveur de messagerie envoie un message m9 "SIP NOTIFY", à la passerelle domestique PAD, indiquant s'il y a des nouveaux messages ou non pour l'utilisateur. La passerelle domestique PAD répond au serveur de messagerie par un message m10 "SIP 200 OK" pour acquitter le message m9 "SIP NOTIFY", puis envoie un message m11 au terminal T3 pour le notifier du statut de la messagerie vocale de l'utilisateur, c'est-à-dire si celui-ci a reçu ou non de nouveaux messages vocaux.

L'étape suivante E3 est l'attente par la passerelle domestique PAD de la réception d'une demande d'établissement d'appel, c'est-à-dire de l'arrivée d'un message SIP INVITE, correspondant au message m12 sur la **figure 3**. Lorsque la passerelle domestique PAD reçoit un tel message, l'étape suivante est l'étape E4.

A l'étape E4, la passerelle domestique PAD ayant reçu un message SIP INVITE, elle en notifie le terminal T3 dans un message m13, qui contient par exemple en paramètres des informations supplémentaires sur l'appel correspondant, tels qu'un identifiant de l'appelant. Dans l'exemple de fonctionnement de la **figure 3**, le terminal T3 ayant indiqué dans le message m0 que la notification d'une demande d'établissement d'appel ne suspendait pas cet établissement d'appel, la passerelle domestique PAD poursuit dans cette étape E4 l'établissement d'appel sans attendre de réponse du terminal T3. S'il s'agit d'un appel entrant, elle envoie pour cela un message m14 " SIP 180 Ringing" au serveur de voix sur IP dans le réseau RES1 de téléphonie sur IP, pour indiquer à l'appelant que le téléphone T2 sonne.

Les étapes suivantes dépendent ensuite des évènements liés à cet appel particulier. Ainsi dans l'exemple de fonctionnement de la **figure 3**, une personne chez l'utilisateur décroche le terminal T2. La passerelle domestique PAD envoie alors un message m15 "SIP 200 OK" au serveur de voix sur IP, et un message m16 de notification d'appel en cours au terminal T3. Le serveur de voix sur IP acquitte le message m15 par un message "SIP ACK". Le flux vocal correspondant à la conversation en cours est en effet maintenant transmis sur le réseau RES1 et à travers la passerelle domestique PAD entre les deux téléphones T1 et T2. Cette notification d'un autre évènement lié à l'appel correspond à une nouvelle étape E51, représentée à la **figure 3**, du procédé selon l'invention.

Lorsque l'un des interlocuteurs de l'appel raccroche, par exemple celui du téléphone T2, la passerelle domestique PAD envoie un message m17 "SIP BYE" au serveur de voix sur IP, qui répond par un message m18 "SIP 200 OK". La passerelle domestique PAD notifie également le terminal T3 de la fin de l'appel par un message m19, ce qui correspond à une nouvelle étape E52 du procédé de gestion d'un flux de données selon l'invention.

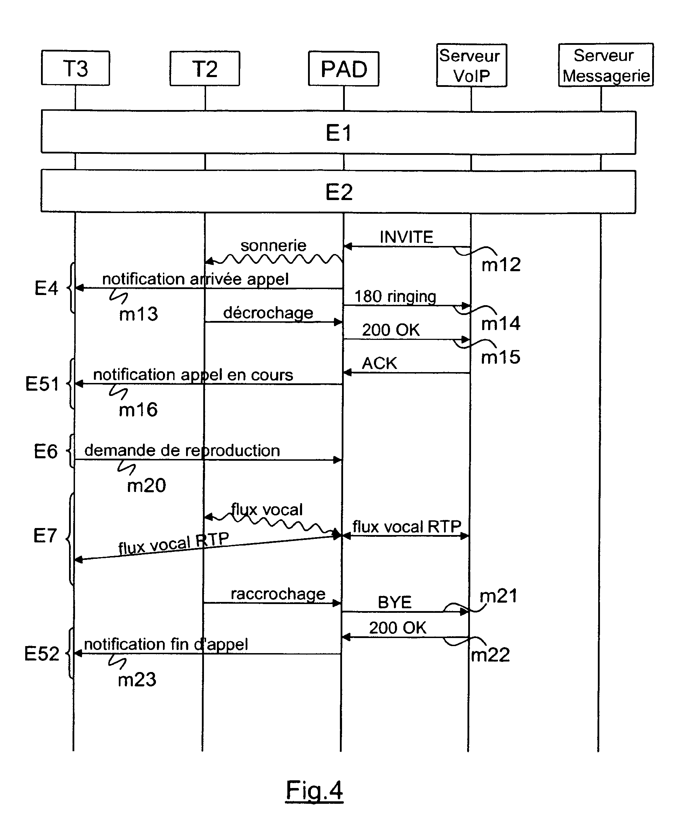

Dans un autre exemple de fonctionnement de l'invention représenté à la **figure 4**, l'application sur le terminal T3 de l'utilisateur permet à celui-ci d'écouter et/ou d'enregistrer une conversation. Dans cet exemple de fonctionnement, les premières étapes E1 à E51 du procédé selon l'invention sont les mêmes que dans l'exemple de la **figure 3**. En revanche après avoir été notifié par un message m16 de l'établissement d'un appel depuis le terminal T1, dans l'exemple de la **figure 4** le terminal T3 affiche à l'utilisateur une interface avec une option pour écouter et/ou enregistrer la conversation entre les téléphones T1 et T2. On suppose ici que l'utilisateur sélectionne cette option. En variante l'application dans le terminal T3 déclenche automatiquement l'enregistrement ou la restitution de la conversation sur le terminal T3. Le terminal T3 envoie donc dans une nouvelle étape E6 du procédé selon l'invention, un message m20 de demande de reproduction de la conversation en cours à la passerelle domestique PAD. A la réception de ce message, la passerelle domestique PAD:
- recopie en temps réel le flux vocal unidirectionnel sur RTP qui provient du réseau RES1 de téléphonie sur IP pour le transmettre au terminal T3, en même temps qu'elle le transmet, éventuellement converti en flux vocal analogique, au téléphone T2,
- et recopie en temps réel le flux vocal unidirectionnel sur RTP qu'elle transmet éventuellement après une conversion analogique/numérique au réseau RES1 de téléphonie sur IP de la part du téléphone T2, pour le transmettre au terminal T3.
Cette reproduction du flux de données entre le téléphone T1 et le téléphone T2 pour le terminal T3 est effectuée dans une nouvelle étape E7 du procédé selon l'invention, représentée à la **figure 4****.**

Enfin, lorsque l'un des interlocuteurs de l'appel raccroche, par exemple celui du téléphone T2, la passerelle domestique PAD envoie un message m21 "SIP BYE" au serveur de voix sur IP, qui répond par un message m22 "SIP 200 OK". La passerelle domestique PAD notifie également, dans une étape E52 du procédé de gestion d'un flux de données selon l'invention, le terminal T3 de la fin de l'appel par un message m23.

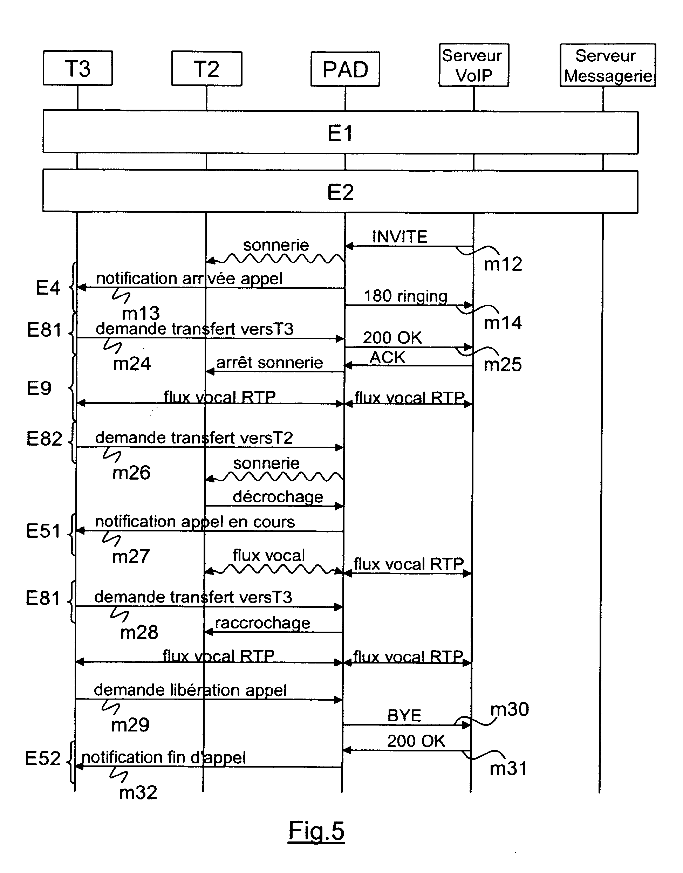

Dans un autre exemple de fonctionnement de l'invention représenté à la **figure 5**, l'application sur le terminal T3 de l'utilisateur permet à celui-ci de transférer un appel, par exemple vers le terminal T3. D'autres destinations de transfert sont bien sûr possibles: par exemple en variante le terminal T3 transfert l'appel vers un autre dispositif connecté à la passerelle domestique PAD, ou vers un autre dispositif distant dans le réseau RES1.

Dans cet exemple de fonctionnement, les premières étapes E1 à E4 du procédé selon l'invention sont les mêmes que dans l'exemple de la **figure 3****.**

En revanche après avoir été notifié par un message m13 d'une demande d'établissement d'appel, le terminal T3 envoie, dans une nouvelle étape E81 du procédé selon l'invention, un message m24 de demande de transfert de l'appel vers le terminal T3, à la passerelle domestique PAD. A la réception du message m24, la passerelle domestique PAD envoie un message m25 "SIP 200 OK" au serveur de voix sur IP dans le réseau RES1 pour établir l'appel entre le terminal T3 et le téléphone T1, et arrête de faire sonner le téléphone T2. Le serveur de voix sur IP acquitte le message m25 par un message "SIP ACK".

A l'étape suivante E9, la passerelle domestique PAD transmet le flux vocal sur RTP en provenance du réseau RES1 au terminal T3, et le flux vocal sur RTP en provenance du terminal T3 au réseau RES1.

Dans une étape suivante E82, l'utilisateur sélectionne une option sur son application, lui permettant de transférer à nouveau l'appel, mais sur le téléphone T2. Le terminal T3 envoie alors, dans cette étape E82 du procédé selon l'invention, un message m26 de demande de transfert de l'appel vers le téléphone T2, à la passerelle domestique PAD. A la réception du message m26, la passerelle domestique PAD fait sonner le téléphone T2. Lorsque l'utilisateur décroche pour reprendre la conversation sur le téléphone T2, la passerelle domestique PAD envoie un message m27 au terminal T3 pour le notifier que l'appel est établi entre le téléphone T2 et le téléphone T1. La passerelle domestique PAD transmet alors le flux vocal sur RTP en provenance du réseau RES1 au téléphone T2, éventuellement après une conversion numérique/analogique et transmet le flux vocal en provenance du téléphone T2, éventuellement après une conversion analogique/numérique, au réseau RES1.

Puis dans une autre étape E81 du procédé selon l'invention, l'utilisateur sélectionne une option sur le terminal T3 pour reprendre l'appel sur le terminal T3. Celui-ci envoie alors un message m28 de demande de transfert de l'appel vers le terminal T3, à la passerelle domestique PAD. A la réception du message m28, la passerelle domestique PAD raccroche le téléphone T2, transmet le flux vocal sur RTP en provenance du réseau RES1 au terminal T3, et transmet le flux vocal sur RTP en provenance du terminal T3 au réseau RES1.

Enfin l'utilisateur sélectionne une option sur le terminal T3 pour libérer l'appel. Le terminal T3 envoie alors un message m29 de demande de libération d'appel à la passerelle domestique PAD. La passerelle domestique PAD envoie alors un message m30 "SIP BYE" au serveur de voix sur IP, qui répond par un message m31 "SIP 200 OK". La passerelle domestique PAD notifie également, dans une étape E52 du procédé de gestion d'un flux de données selon l'invention, le terminal T3 de la fin de l'appel par un message m32.

Il est à noter que plusieurs variantes de fonctionnement de l'invention sont envisageables, notamment en fonction des différents types de notifications auxquelles a souscrit le terminal T3. Par exemple en variante le terminal T3 ne reçoit que des notifications de demande d'établissement d'appels, et non des notifications d'autres évènements relatifs à ces appels. Dans une autre variante, le terminal T3 ne reçoit des notifications de demande d'établissement d'appels que pour les appels sortants. Enfin dans une variante de l'exemple de fonctionnement de l'invention représenté à la **figure 5****,** le terminal T3 indique, dans le message m0 d'enregistrement à la passerelle domestique PAD, que la notification d'une demande d'établissement d'appel suspend l'établissement de l'appel. Dans ce cas, avant d'envoyer un message "SIP 180 Ringing" au serveur de voix sur IP dans le réseau RES1, la passerelle domestique PAD attend de recevoir le message m24 de demande de transfert d'appel du terminal T3. Dans ce cas, si le terminal T3 ne répond pas au bout d'un temps prédéterminé, un mécanisme est prévu pour continuer l'établissement d'appel ou l'arrêter en fonction d'une configuration par défaut.

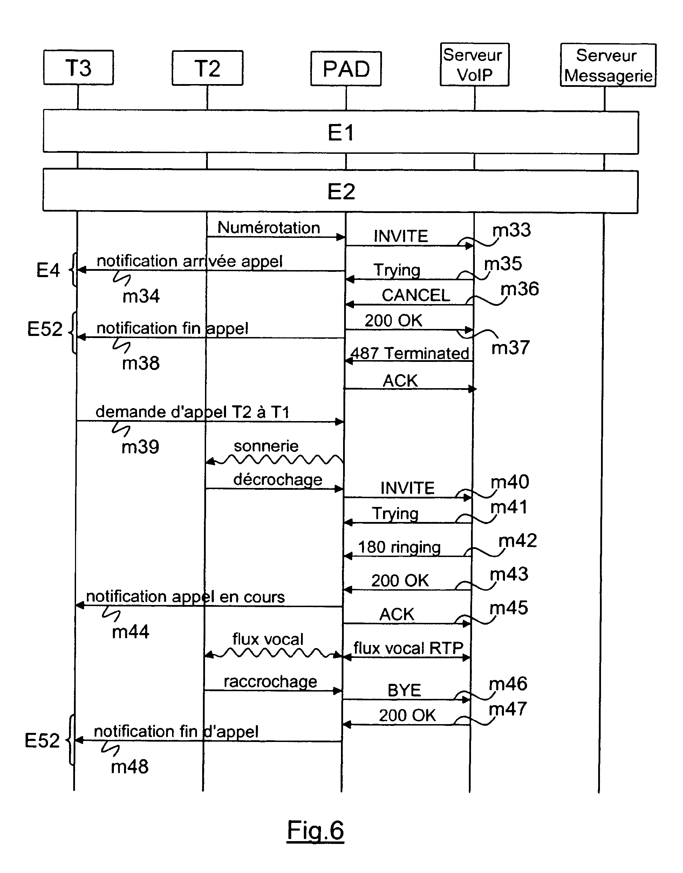

Dans un autre exemple de fonctionnement de l'invention représenté à la **figure 6**, le terminal T3 utilise les informations fournies dans une notification de demande d'établissement d'appel précédemment reçue de la passerelle domestique PAD, pour permettre à l'utilisateur de sélectionner une option de rappel automatique depuis le terminal T3. Dans cet exemple de fonctionnement, les premières étapes E1 à E3 du procédé selon l'invention sont identiques à celles de l'exemple de la **figure 3**.

A l'étape E4, la passerelle domestique PAD reçoit une demande d'établissement d'appel du téléphone T2. La passerelle domestique PAD envoie alors un message m33 "SIP INVITE" au serveur de voix sur IP dans le réseau RES1 de téléphonie sur IP, et notifie le terminal T3 de la demande d'établissement d'un appel sortant par un message m34 qui comporte en paramètres le type d'appel, c'est-à-dire entrant ou sortant, et le numéro composé sur le téléphone T2, correspondant au téléphone T1.

Le serveur de voix sur IP répond par un message m35 "SIP Trying", à la passerelle domestique PAD, puis envoie à celle-ci un message m36."SIP CANCEL" pour indiquer que l'appel n'a pas abouti. La passerelle domestique PAD envoie alors un message m37 "SIP 200 OK" au serveur de voix sur IP, et notifie le terminal T3 de la fin de l'appel par un message m38. Le serveur de voix sur IP répond en parallèle à la passerelle domestique PAD par un message "SIP 487 Terminated", que la passerelle domestique PAD acquitte par un message "SIP ACK".

L'application sur le terminal T3 présente alors à l'utilisateur une option de rappel automatique au bout de 10 minutes par exemple, vers le numéro composé fourni en paramètre dans le message m34 reçu précédemment. On suppose ici que l'utilisateur sélectionne cette option.

Au bout de 10 minutes, le terminal T3 envoie alors un message m39 de demande d'établissement d'appel entre le téléphone T2 et le téléphone T1 à la passerelle domestique PAD. La passerelle domestique PAD fait alors sonner le téléphone T2, et lorsque celui-ci est décroché, elle envoie un message m40 "SIP INVITE" au serveur de voix sur IP pour établir un appel vers le téléphone T1. Le serveur voix sur IP répond à la passerelle domestique PAD par un message m41 "Trying", puis envoie à la passerelle domestique PAD un message m42 "SIP 180 Ringing" indiquant que le téléphone T1 sonne, et un message m43 "200 OK" pour indiquer le décrochage de l'appelé. La passerelle domestique PAD envoie ensuite un message m44 au terminal T3 pour le notifier que l'appel est établi entre le téléphone T1 et le téléphone T2, puis un message m45 "ACK" au serveur de voix sur IP. Le flux vocal bidirectionnel correspondant à la conversation en cours est alors transmis sur le réseau RES1 et à travers la passerelle domestique PAD entre les deux téléphones T1 et T2.

Enfin, lorsque l'un des interlocuteurs de l'appel raccroche, par exemple celui du téléphone T2, la passerelle domestique PAD envoie un message m46 "SIP BYE" au serveur de voix sur IP, qui répond par un message m47 "SIP 200 OK". La passerelle domestique PAD notifie également le terminal T3 de la fin de l'appel par un message m48.

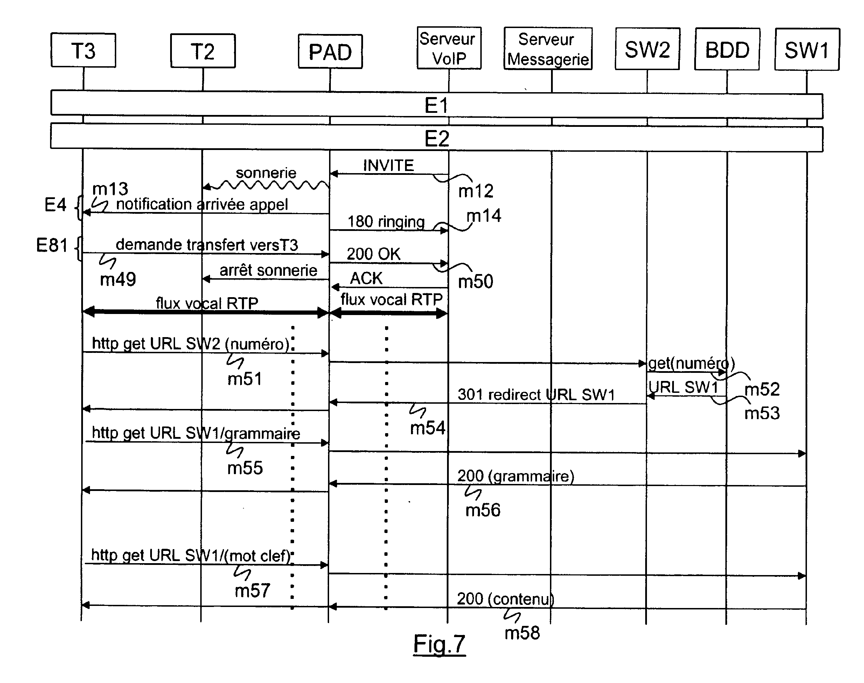

Dans un autre exemple de fonctionnement de l'invention représenté à la **figure 7****,** l'application sur le terminal T3 offre un service de navigation contextuelle à l'utilisateur, en couplant le service de téléphonie sur IP avec le service d'accès à Internet fournis par la passerelle domestique PAD. Ce service est par exemple activé par l'utilisateur en sélectionnant une option spécifique sur l'interface utilisateur de l'application, après avoir été notifié de l'arrivée d'un appel sur cette interface utilisateur.

Dans cet exemple de fonctionnement, les premières étapes E1 à E4 du procédé selon l'invention sont identiques à celles de l'exemple de la **figure 3**. En revanche après que le terminal T3 ait notifié à l'utilisateur l'arrivée d'un appel suite à la réception du message m13 de notification d'une demande d'établissement d'appel, l'utilisateur sélectionne une option de navigation contextuelle sur le terminal T3. Celui-ci envoie alors un message m49 de demande de transfert de l'appel vers le terminal T3, à la passerelle domestique PAD.

A la réception du message m49, la passerelle domestique PAD envoie un message m50 "SIP 200 OK" au serveur de voix sur IP dans le réseau RES1 pour établir l'appel entre le terminal T3 et le téléphone T1, et arrête de faire sonner le téléphone T2. Le serveur de voix sur IP acquitte en parallèle le message m50 par l'envoi d'un message "SIP ACK" à la passerelle domestique PAD. Puis la passerelle domestique PAD transmet le flux vocal sur RTP en provenance du réseau RES1 au terminal T3, et le flux vocal sur RTP en provenance du terminal T3 au réseau RES1.

En parallèle à cet établissement d'appel entre le terminal T3 et le téléphone T1, le terminal T3 envoie un message m51 "HTTPS (d'après l'anglais "HyperText Transmission Protocol Secured") GET" à un serveur SW2 dans le réseau Internet RES2, contenant en paramètre le numéro du téléphone T1 fourni par la passerelle domestique PAD au terminal T3 dans le message m13 de notification de demande d'établissement d'appel. Le serveur SW2 consulte alors une base de données BDD de type ENUM (d'après la norme "Electronic NUMbering" définie à l' "Internet Engineering Task Force (IETF)"): il envoie un message m52 "get" avec en paramètre le numéro du téléphone T1, et obtient en retour dans un message m53 une URI (d'après l'anglais "Uniform Resource Identifier") correspondant à l'URL (d'après l'anglais "Uniform Resource Locator") d'un site web sur un serveur SW1 dans le réseau Internet RES2. Le serveur SW2 envoie alors un message de réponse m54 "HTTPS 301 redirect" contenant en paramètre l'URL de ce site web, au terminal T3.

A la réception de cette URL dans le message m54, le terminal T3 télécharge alors, cette fois en mode non sécurisé, une grammaire de reconnaissance vocale spécifique au service rendu par le correspondant du téléphone T1, qui est par exemple un opérateur d'assistance informatique. Pour cela, le terminal T3 envoie un message m55 "HTTP GET" contenant en paramètre l'URL reçue dans le message m54, et une demande de téléchargement de grammaire de reconnaissance vocale, au serveur SW1. Le serveur SW1 répond au terminal T3 par un message m56 "HTTP 200" contenant en paramètre une grammaire de reconnaissance vocale.

A la réception du message m56, le terminal T3 met à jour un logiciel de reconnaissance vocale avec cette grammaire contenant une liste de mots clefs à détecter, et active ce logiciel de reconnaissance vocale. Lorsqu'un mot clef de cette liste est détecté dans le flux vocal bidirectionnel entre le téléphone T1 et le terminal T3, le terminal T3 envoie un message m57 "HTTP GET" contenant en paramètre ce mot clef, au serveur SW1. Celui-ci répond alors avec un message m58 "HTTP 200" contenant en paramètre le contenu d'une page web correspondant à ce mot-clef.

Ainsi le terminal T3 affiche à l'utilisateur des informations pertinentes au fur et à mesure de sa conversation avec le correspondant du téléphone T1, par exemple des tableaux ou des dessins qui lui sont commentés par ce correspondant.

Le procédé selon l'invention permet de mettre en oeuvre d'autres déclinaisons de ce service. Par exemple en variante, la navigation contextuelle s'opère par l'envoi de DTMF (d'après l'anglais "Dual Tone Multi Frequency") par l'utilisateur sur le téléphone T2 ou par le correspondant du téléphone T1, la réception de ces DTMF étant notifiée par la passerelle domestique PAD au terminal T3, qui va alors chercher une page web correspondante sur le serveur SW1.

Dans une autre variante, lors d'un appel entre le téléphone T1 et le téléphone T2, le terminal T3 est notifié de cet appel par la passerelle domestique PAD, et affiche une vidéo d'attente à l'utilisateur, cette vidéo étant téléchargée sur un serveur distant lié au correspondant du téléphone T1, jusqu'à la réception d'une notification de la passerelle domestique PAD indiquant que l'appel est établi entre le téléphone T1 et le téléphone T2. L'invention permet ainsi d'utiliser les capacités d'un des terminaux reliés à la passerelle domestique PAD pour améliorer un service rendu par la passerelle domestique PAD à un autre terminal.

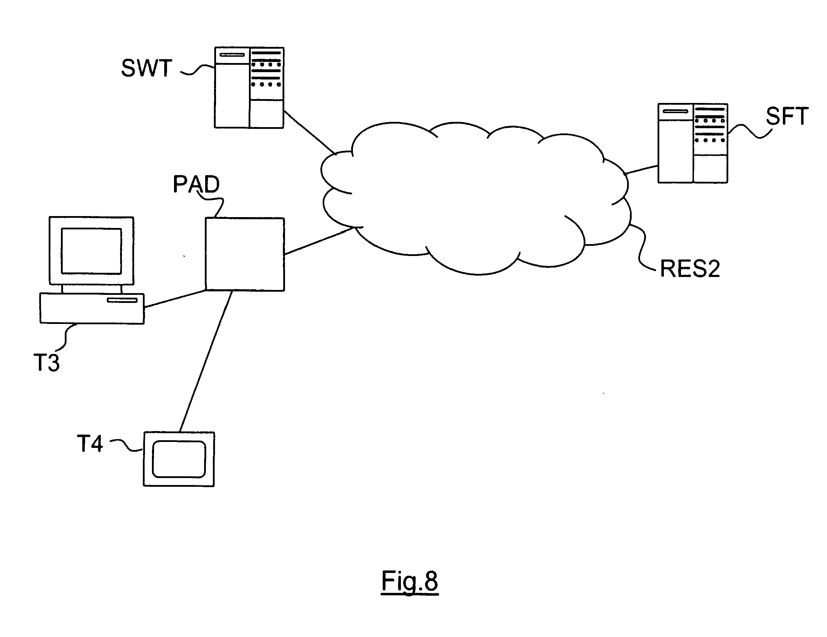

Selon un deuxième mode de réalisation de l'invention représenté à la **figure 8**, le procédé de gestion d'un flux de données selon l'invention, mis en oeuvre dans la passerelle domestique PAD de l'utilisateur, permet à celui-ci par l'intermédiaire du terminal T3, de gérer un flux vidéo envoyé par un serveur vidéo distant SFT dans le réseau RES2, à un téléviseur T4 muni d'un décodeur numérique. Le téléviseur T4 est relié à la passerelle domestique PAD par liaison filaire ou WiFi. Les flux vidéo arrivant au téléviseur T4 transitent donc par la passerelle domestique PAD.

Pour cela, de manière similaire au premier mode de réalisation de l'invention, la passerelle domestique PAD implémente une interface propriétaire permettant de notifier le terminal T3 d'évènements liés à la réception d'un flux vidéo sur le téléviseur T4, et de recevoir des instructions du terminal T3 concernant ce flux vidéo. Le terminal T3 implémente de manière symétrique une interface propriétaire, pour recevoir ces notifications et envoyer ces instructions à la passerelle domestique PAD. Cette interface est implémentée dans une application présentant également une interface utilisateur, présentant à celui-ci des boutons d'action.

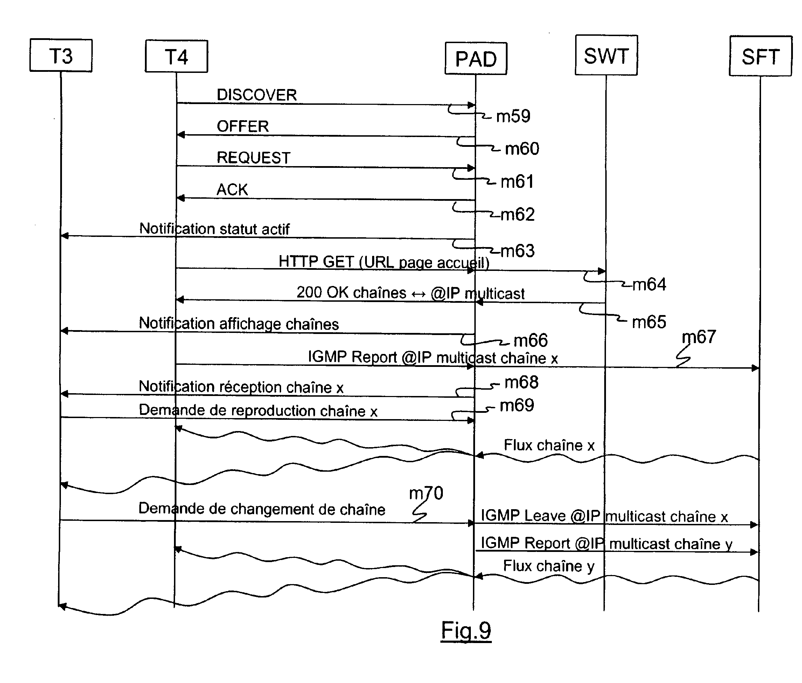

Un exemple de fonctionnement du procédé de gestion d'un flux de données selon l'invention dans ce deuxième mode de réalisation est représenté à la **figure 9**. On suppose, dans cet exemple de fonctionnement, que le terminal T3 s'est préalablement enregistré auprès de la passerelle domestique PAD, pour recevoir de celle-ci des notifications d'évènements liés à la réception d'un flux vidéo, de manière similaire à l'étape E1 du premier mode de réalisation de l'invention. De plus, préalablement au fonctionnement du procédé selon l'invention, le téléviseur T4 obtient une adresse IP privée auprès de la passerelle domestique PAD en utilisant le protocole DHCP (d'après l'anglais "Dynamic Host Configuration Protocol"). Pour cela le téléviseur T4 envoie un message m59 "DHCP DISCOVER" à la passerelle domestique PAD. Celle-ci lui répond par un message m60 "DHCP OFFER" lui proposant une adresse IP privée. Le téléviseur T4 demande alors à ce que la passerelle domestique PAD lui attribue cette adresse IP privée en lui envoyant un message m61 "DHCP REQUEST", et la passerelle domestique PAD lui retourne un message m62 d'acceptation "DHCP ACK". Suite à cette configuration réseau du téléviseur T4, la passerelle domestique PAD notifie le terminal T3 par un message m63 que le téléviseur T4 est opérationnel pour recevoir des flux vidéo.

Lorsqu'ensuite une personne chez l'utilisateur, par exemple un de ses enfants, allume le téléviseur T4, celui-ci envoie un message m64 "HTTP GET" contenant l'URL d'un serveur web SWT représenté à la **figure 8**, à la passerelle domestique PAD qui le transmet dans le réseau RES2 à destination du serveur SWT. Celui-ci retourne au téléviseur T4, par l'intermédiaire de la passerelle domestique PAD, une page d'accueil dans un message m65 "HTTP 200 OK", qui comporte une table de correspondance entre des chaînes audiovisuelles et des adresses IP multicast. Le téléviseur T4 affiche alors à l'écran une mosaïque d'images représentant chacune une chaîne à sélectionner. A la réception du message m65 de réponse du serveur SWT, la passerelle domestique PAD notifie le terminal T3 par un message m66 de l'affichage de la mosaïque sur le téléviseur T4. Le message m66 comporte également la table de correspondance entre des chaînes audiovisuelles et des adresses IP multicast.

On suppose maintenant qu'une chaîne x est sélectionnée sur le téléviseur T4. Celui-ci envoie alors un message m67 "IGMP Report" contenant l'adresse IP multicast de la chaîne x, à la passerelle domestique PAD, qui la transmet au serveur vidéo SFT. A la réception du message m67, la passerelle domestique PAD notifie également le terminal T3 de la demande d'établissement d'un flux vidéo, par un message m68. Le message m68 contient en paramètre le nom de la chaîne x.

A la réception du message m68, le terminal T3 affiche sur son écran pour l'utilisateur un message de notification de réception de la chaîne x sur le téléviseur T4, et divers boutons d'action, dont un bouton pour recevoir la chaîne x sur le terminal T3. On suppose ici que l'utilisateur sélectionne ce bouton. Le terminal T3 envoie alors un message m69 de demande de reproduction de la chaîne x, à la passerelle domestique PAD. A la réception du message m69, la passerelle domestique PAD, qui reçoit le flux vidéo correspondant à la chaîne x en provenance du serveur vidéo SFT et le transmet au téléviseur T4, recopie ce flux et le transmet en parallèle au terminal T3, qui l'affiche à son écran. Si l'utilisateur, en visualisant la chaîne x, décide que cette chaîne n'est pas adaptée pour son enfant, il sélectionne une autre chaîne y par un bouton d'action sur son terminal T3. Le terminal T3 envoie alors un message m70 à la passerelle domestique PAD, demandant à ce que la chaîne reçue par le téléviseur T4 change pour être la chaîne y. A la réception du message m70, la passerelle domestique PAD envoie un message "IGMP Leave" contenant l'adresse IP multicast de la chaîne x au serveur vidéo SFT, puis un message "IGMP Report" contenant l'adresse IP multicast de la chaîne y au serveur vidéo SFT, pour recevoir la chaîne y au lieu de la chaîne x. Le serveur vidéo SFT envoie alors le flux vidéo correspondant à la chaîne y à la passerelle domestique PAD, qui recopie ce flux et le transmet en parallèle au téléviseur T4 et au terminal T3.

D'autres variantes d'exemples de fonctionnement de l'invention sont bien sûr envisageables dans ce deuxième mode de réalisation, de manière similaire au premier mode de réalisation.

De plus il est à noter que les premier et deuxième modes de réalisation de l'invention sont compatibles, c'est-à-dire que la passerelle domestique PAD implémente par exemple plusieurs types d'interfaces propriétaires pour le terminal T3, par exemple une interface spécifique aux notifications d'évènements liés aux flux vidéo, et une interface spécifique aux notifications d'évènements liés aux appels téléphoniques.

## Revendications

1. Procédé de gestion d'un flux de données dont l'établissement entre un dispositif source (T1) et un dispositif destinataire (T2) implique le passage d'un flux de signalisation par une passerelle domestique (PAD), l'un desdits dispositifs (T1) étant un premier dispositif distant connecté à un réseau de communication (RES1) et l'autre desdits dispositifs (T2) étant un deuxième dispositif connecté audit réseau de communication (RES1) par l'intermédiaire de ladite passerelle domestique (PAD), **caractérisé en ce qu'**il comporte:
- une étape (E4) de notification par ladite passerelle domestique (PAD), d'un évènement relatif à une demande d'établissement dudit flux de données, à un troisième dispositif (T3) connecté à ladite passerelle domestique (PAD),
- et une étape de réception par ladite passerelle domestique (PAD) d'une instruction de modification du traitement par défaut dudit flux de données dans ladite passerelle domestique (PAD), envoyée par ledit troisième dispositif (T3).

2. Procédé de gestion d'un flux de données selon la revendication 1, **caractérisé en ce qu'**il comporte en outre une étape (E51) de notification d'au moins un autre évènement relatif à l'établissement dudit flux de données lorsque celui-ci est établi entre ledit dispositif source (T1) et ledit dispositif destinataire (T2).

3. Procédé de gestion d'un flux de données selon la revendication 1 ou 2, **caractérisé en ce que** ladite instruction de modification est une demande de reproduction (m20) dudit flux de données, envoyée par ledit troisième dispositif (T3), et **en ce que** ladite étape de réception (E6) est suivie d'une étape (E7) de recopie dudit flux de données et de transmission dudit flux ainsi recopié par ladite passerelle domestique (PAD) audit troisième dispositif (T3).

4. Procédé de gestion d'un flux de données selon la revendication 1, **caractérisé en ce que** lors de ladite étape (E4) de notification, l'établissement dudit flux de données est suspendu, ladite passerelle domestique (PAD) donnant le contrôle dudit flux de données audit troisième dispositif (T3).

5. Procédé de gestion d'un flux de données selon la revendication 1 ou 4, dans lequel ladite instruction de modification est une instruction (m24) de transfert dudit flux de données à un dispositif (T3) autre que ledit dispositif destinataire (T2), envoyée par ledit troisième dispositif (T3), et dans lequel ladite étape de réception (E81) est suivie d'une étape de transfert (E9) par ladite passerelle domestique (PAD) dudit flux de données audit autre dispositif (T3).

6. Passerelle domestique (PAD) comportant des moyens de connexion à un réseau de communication (RES1) auquel est connecté un premier dispositif distant (T1), des moyens de connexion à un deuxième dispositif (T2), et des moyens de réception d'un flux de signalisation en provenance d'un desdits dispositifs (T1) dit dispositif source pour établir un flux de données avec l'autre desdits dispositifs (T2) dit dispositif destinataire, **caractérisée en ce qu'**elle comporte en outre:
- des moyens de notification d'un évènement relatif à une demande d'établissement dudit flux de données à un troisième dispositif (T3) lorsque celui-ci est connecté à ladite passerelle domestique (PAD),
- et des moyens de réception, par ladite passerelle domestique (PAD) d'une instruction de modification du traitement par défaut dudit flux de données, envoyée par ledit troisième dispositif (T3).

7. Passerelle domestique (PAD) selon la revendication 6, **caractérisée en ce qu'**elle comporte en outre des moyens d'interruption de l'établissement dudit flux de données entre ledit dispositif source (T1) et ledit dispositif destinataire (T2), jusqu'à réception de ladite instruction de modification, celle-ci indiquant la suite à donner audit flux de données.

8. Dispositif (T3) comportant des moyens de connexion à une passerelle domestique (PAD) pour accéder à un réseau de communication (RES2), **caractérisé en ce qu'**il comporte:
- des moyens de réception d'une notification d'un évènement relatif à une demande d'établissement d'un flux de données entre deux autres dispositifs (T1, T2) et dont l'établissement nécessite le passage d'un flux de signalisation dans ladite passerelle domestique (PAD),
- et des moyens d'envoi à ladite passerelle domestique (PAD), d'une instruction de modification du traitement par défaut dudit flux de données dans ladite passerelle domestique (PAD).

9. Dispositif (T3) selon la revendication 8, **caractérisé en ce qu'**il comporte en outre:
- des moyens d'association d'un identifiant d'un desdits autres dispositifs (T1, T2), inclus dans ladite notification (m13), avec une adresse de ressource hébergée dans un serveur distant (SW1),
- et des moyens de téléchargement de ladite ressource.

10. Dispositif (T3) selon la revendication 9, **caractérisé en ce qu'**il comporte en outre des moyens de contrôle dudit flux de données pour recevoir celui-ci, et des moyens de reconnaissance vocale aptes à utiliser une grammaire contenue dans ladite ressource.

11. Programme d'ordinateur comportant des instructions pour mettre en oeuvre chacune des étapes du procédé selon l'une quelconque des revendications 1 à 5, lorsqu'il est exécuté sur un ordinateur.

## Claims

1. Method for managing a data stream whose establishment between a source device (T1) and a recipient device (T2) involves the passage of a signalling stream through a domestic gateway (PAD), one of said devices (T1) being a first remote device connected to a communication network (RES1) and the other of said devices (T2) being a second device connected to said communication network (RES1) by way of said domestic gateway (PAD), **characterized in that** it comprises:
- a step (E4) of notification by said domestic gateway (PAD), of an event relating to a request to establish said data stream, to a third device (T3) connected to said domestic gateway (PAD),
- and a step of reception by said domestic gateway (PAD) of an instruction for modifying the default processing of said data stream in said domestic gateway (PAD), dispatched by said third device (T3).

2. Method for managing a data stream according to Claim 1, **characterized in that** it furthermore comprises a step (E51) of notification of at least one other event relating to the establishment of said data stream when the latter is established between said source device (T1) and said recipient device (T2).

3. Method for managing a data stream according to Claim 1 or 2, **characterized in that** said modifying instruction is a request (m20), dispatched by said third device (T3), for reproduction of said data stream, and **in that** said reception step (E6) is followed by a step (E7) of copying of said data stream and of transmission of said stream thus copied by said domestic gateway (PAD) to said third device (T3).

4. Method for managing a data stream according to Claim 1, **characterized in that** during said notification step (E4), the establishment of said data stream is suspended, said domestic gateway (PAD) giving control of said data stream to said third device (T3).

5. Method for managing a data stream according to Claim 1 or 4, in which said modifying instruction is an instruction (m24), dispatched by said third device (T3), to transfer said data stream to a device (T3) other than said recipient device (T2), and in which said reception step (E81) is followed by a step (E9) of transfer by said domestic gateway (PAD) of said data stream to said other device (T3).

6. Domestic gateway (PAD) comprising means for connection to a communication network (RES1) to which a first remote device (T1) is connected, means for connection to a second device (T2), and means for receiving a signalling stream originating from one of said devices (T1) termed the source device so as to establish a data stream with the other of said devices (T2) termed the recipient device, **characterized in that** it furthermore comprises:
- means for notification of an event relating to a request to establish said data stream to a third device (T3) when the latter is connected to said domestic gateway (PAD),
- and means for reception by said domestic gateway (PAD) of an instruction, dispatched by said third device (T3), to modify the default processing of said data stream.

7. Domestic gateway (PAD) according to Claim 6, **characterized in that** it furthermore comprises means for interrupting the establishment of said data stream between said source device (T1) and said recipient device (T2), until reception of said modifying instruction, the latter indicating what to do subsequently with said data stream.

8. Device (T3) comprising means for connection to a domestic gateway (PAD) so as to access a communication network (RES2), **characterized in that** it comprises:
- means for receiving a notification of an event relating to a request to establish a data stream between two other devices (T1, T2) and whose establishment requires the passage of a signalling stream in said domestic gateway (PAD),
- and means for dispatching to said domestic gateway (PAD), an instruction for modifying the default processing of said data stream in said domestic gateway (PAD).

9. Device (T3) according to Claim 8, **characterized in that** it furthermore comprises:
- means for associating an identifier of one of said other devices (T1, T2), included in said notification (m13), with a resource address hosted in a remote server (SW1),
- and means for downloading said resource.

10. Device (T3) according to Claim 9, **characterized in that** it furthermore comprises means for controlling said data stream so as to receive the latter, and voice recognition means able to use a grammar contained in said resource.

11. Computer program comprising instructions for implementing each of the steps of the method according to any one of Claims 1 to 5, when it is executed on a computer.

## Patentansprüche

1. Verfahren zur Verwaltung eines Datenflusses, dessen Aufbau zwischen einer Quellenvorrichtung (T1) und einer Zielvorrichtung (T2) den Durchgang eines Signalflusses durch ein Heim-Gateway (PAD) voraussetzt, wobei eine der Vorrichtungen (T1) eine mit einem Kommunikationsnetz (RES1) verbundene, erste ferne Vorrichtung ist, und die andere der Vorrichtungen (T2) eine mit dem Kommunikationsnetz (RES1) über das Heim-Gateway (PAD) verbundene, zweite Vorrichtung ist, **dadurch gekennzeichnet, dass** es aufweist:
- einen Schritt (E4) der Mitteilung, durch das Heim-Gateway (PAD), eines Ereignisses bezüglich einer Aufbauanforderung des Datenflusses an eine dritte Vorrichtung (T3), die mit dem Heim-Gateway (PAD) verbunden ist,
- und einen Schritt des Empfangs durch das Heim-Gateway (PAD) einer Änderungsanweisung der Standard-Verarbeitung des Datenflusses im Heim-Gateway (PAD), die von der dritten Vorrichtung (T3) gesendet wird.

2. Verfahren zur Verwaltung eines Datenflusses nach Anspruch 1, **dadurch gekennzeichnet, dass** es außerdem einen Schritt (E51) der Mitteilung mindestens eines anderen Ereignisses betreffend den Aufbau des Datenflusses aufweist, wenn dieser zwischen der Quellenvorrichtung (T1) und der Zielvorrichtung (T2) aufgebaut wird.

3. Verfahren zur Verwaltung eines Datenflusses nach Anspruch 1 oder 2, **dadurch gekennzeichnet, dass** die Änderungsanweisung eine Anforderung der Reproduktion (m20) des Datenflusses ist, die von der dritten Vorrichtung (T3) gesendet wird, und dass auf den Empfangsschritt (E6) ein Schritt (E7) der Kopierens des Datenflusses und der Übertragung des so kopierten Flusses durch das Heim-Gateway (PAD) an die dritte Vorrichtung (T3) folgt.

4. Verfahren zur Verwaltung eines Datenflusses nach Anspruch 1, **dadurch gekennzeichnet, dass** während des Mitteilungsschritts (E4) der Aufbau des Datenflusses ausgesetzt wird, wobei das Heim-Gateway (PAD) die Kontrolle über den Datenfluss an die dritte Vorrichtung (T3) übergibt.

5. Verfahren zur Verwaltung eines Datenflusses nach Anspruch 1 oder 4, bei dem die Änderungsanweisung eine Transferanweisung (m24) des Datenflusses an eine andere Vorrichtung (T3) als die Zielvorrichtung (T2) ist, die von der dritten Vorrichtung (T3) gesendet wird, und bei dem auf den Empfangsschritt (E81) ein Schritt des Transfers (E9) durch das Heim-Gateway (PAD) des Datenflusses an die andere Vorrichtung (T3) folgt.

6. Heim-Gateway (PAD), das Einrichtungen zur Verbindung mit einem Kommunikationsnetz (RES1), mit dem eine erste ferne Vorrichtung (T1) verbunden ist, Einrichtungen zur Verbindung mit einer zweiten Vorrichtung (T2) und Empfangseinrichtungen eines Signalflusses von einer der Vorrichtungen (T1), Quellenvorrichtung genannt, aufweist, um einen Datenfluss mit der anderen der Vorrichtungen (T2), Zielvorrichtung genannt, aufzubauen, **dadurch gekennzeichnet, dass** es weiter aufweist:
- Einrichtungen zur Mitteilung eines Ereignisses bezüglich einer Aufbauanforderung des Datenflusses an eine dritte Vorrichtung (T3), wenn diese mit dem Heim-Gateway (PAD) verbunden ist,
- und Einrichtungen zum Empfang, durch das Heim-Gateway (PAD), einer Änderungsanweisung der Standard-Verarbeitung des Datenflusses, die von der dritten Vorrichtung (T3) gesendet wird.

7. Heim-Gateway (PAD) nach Anspruch 6, **dadurch gekennzeichnet, dass** es außerdem Einrichtungen zur Unterbrechung des Aufbaus des Datenflusses zwischen der Quellenvorrichtung (T1) und der Zielvorrichtung (T2) bis zum Empfang der Änderungsanweisung aufweist, wobei diese das weitere Vorgehen bezüglich des Datenflusses anzeigt.

8. Vorrichtung (T3), die Einrichtungen zur Verbindung mit einem Heim-Gateway (PAD) aufweist, um auf ein Kommunikationsnetz (RES2) zuzugreifen, **dadurch gekennzeichnet, dass** sie aufweist:
- Einrichtungen zum Empfang einer Mitteilung eines Ereignisses bezüglich einer Aufbauanforderung eines Datenflusses zwischen zwei anderen Vorrichtungen (T1, T2), und dessen Aufbau den Durchgang eines Signalflusses durch das Heim-Gateway (PAD) erfordert,
- und Einrichtungen zum Senden an das Heim-Gateway (PAD) einer Änderungsanweisung der Standard-Verarbeitung des Datenflusses im Heim-Gateway (PAD).

9. Vorrichtung (T3) nach Anspruch 8, **dadurch gekennzeichnet, dass** sie außerdem aufweist:
- Einrichtungen zur Verbindung einer Kennung einer der anderen Vorrichtungen (T1, T2), die in der Mitteilung (m13) enthalten ist, mit einer Ressourcenadresse, die in einem fernen Server (SW1) untergebracht ist,
- und Einrichtungen zum Herunterladen der Ressource.

10. Vorrichtung (T3) nach Anspruch 9, **dadurch gekennzeichnet, dass** sie außerdem Einrichtungen zur Kontrolle des Datenflusses, um diesen zu empfangen, und Einrichtungen zur Spracherkennung aufweist, die eine in der Ressource enthaltene Grammatik verwenden können.

11. Computerprogramm, das Anweisungen aufweist, um jeden der Schritte des Verfahrens nach einem der Ansprüche 1 bis 5 durchzuführen, wenn es auf einem Computer ausgeführt wird.
